# EUROPEAN PATENT SPECIFICATION

(11) **EP 3 953 229 B1**
(45) Date of publication and mention of the grant of the patent: **04.09.2024**
(21) Application number: 20716834.5
(22) Date of filing: 10.04.2020
(51) Int. Cl.: B60W 50/10

(54) **AN IMPROVED ELECTRONIC CONTROL DEVICE FOR AN AUTOMOBILE**
VERBESSERTE ELEKTRONISCHE STEUERUNGSVORRICHTUNG FÜR EIN AUTOMOBIL
DISPOSITIF DE COMMANDE ÉLECTRONIQUE AMÉLIORÉ POUR UNE AUTOMOBILE

(30) Priority: 10.04.2019 BE 201905231
(43) Date of publication of application: 16.02.2022
(73) Proprietor: Moens, Alex, 9790 Wortegem - Petegem (BE)
(72) Inventor: Moens, Alex, 9790 Wortegem - Petegem (BE)
(74) Representative: BiiP bv
(86) International application number: PCT/EP2020/060338
(87) International publication number: WO 2020/208238

(56) References cited:
- WO-A2-2016/069405
- US-A1- 2015 375 745
- US-B2- 9 428 053

## Description

### FIELD OF INVENTION

The present invention generally relates to an electronic control unit for an automobile to provide safety while driving. More particularly, the present invention relates to a vehicle electronic control device to control drive output of the vehicle in situations where a gas pedal and a brake pedal are operated simultaneously.

### BACKGROUND OF INVENTION

Presently, there have been technological solutions to avoid accidental risks or injuries, in situations when a gas (accelerator) pedal and a brake pedal are operated simultaneously by the driver of a vehicle. Such situations can happen unintentionally, in a panic road situation or may be in an accidental operation of any one of the brake or gas pedal by a foot mat in the vehicle. These situations may lead to accidental risks, and thus, need to be avoided.

In any of such unintentional situations, conventionally a control device is installed in the vehicle, which regulates a throttle valve and closes it down in order to reduce drive output power of the vehicle. Such control devices continuously monitor the operation of gas pedal and the brake pedal and, are able to detect the simultaneous depression of both the pedals. Further, they take into consideration the operation of the gas pedal, evaluate the degree of operation on the gas pedal, and regulate functioning of the throttle valve depending on the degree of operation on the gas pedal. Thereby, the control device may either close the throttle valve completely, or may close it partially; in turn controlling the drive output power of the vehicle.

A prior art document JP5044029B1 discloses a vehicle safety control device, in which an accelerator operation amount is detected by an accelerator position sensor, and an electronic throttle is controlled by air amount control means, in response to the accelerator operation amount. When it is detected that an accelerator and a brake are simultaneously operated, the air amount control means is accordingly instructed such that the engine output is limited by an engine output limitation determination means. When the accelerator operation amount is less than a predetermined value, the engine output limit instruction is prohibited for a predetermined time from the detection of the brake operation.

Another prior art document US9428053 discloses an electronic control unit that performs a reduction control for reducing vehicle drive force when the accelerator and the brake are operated simultaneously. The electronic control unit also varies the amount of decrease in the vehicle drive force during the reduction control and conditions under which the reduction control is implemented depending on the order of the accelerator operation and brake operation resulting in the above-noted simultaneous operation. For example, the amount of decrease in the vehicle drive force is less when the brake is operated first in comparison with when the accelerator is operated first. Thus, it is possible to operate the vehicle drive force in accordance with the intention of the driver.

As disclosed in the above examples of prior art documents, the present technologies disclose the control units which control the operation of the throttle valve, or varies the vehicle drive force, depending on the situations when accelerator pedal and the brake pedal are operated simultaneously, and on the amount of depression of the accelerator pedal. However, the present technologies work completely depending on the degree of accelerator pedal operation, and fail to recognize the degree of brake pedal operation. This may lead to inefficiency in functioning of the control unit, since the control unit may lack in determining a more precise amount of closure of throttle valve. The control units of the present technologies do not consider the consequent effects, on the vehicle drive, of the amount of force with which the brake pedal is depressed along with the accelerator pedal. Since, the degree with which the throttle valve would be closed only depends on the degree with which accelerator pedal is depressed, in the unintentional situations described herein, the control units may lack in determining an appropriate value for throttle valve to close for reducing vehicle drive output.

A further prior art document WO 2016/069405 A2 discloses a throttle override method for a recreational vehicle including: determining an opening of a throttle valve of an engine of the vehicle; detecting an application of a brake of the vehicle during the opening of the throttle valve; and reducing the opening of the throttle valve in response to an application of the brake exceeding a threshold level.

Hence, there arises a need to provide an improved mechanism of control unit for a vehicle which controls the drive force of the vehicle more effectively, by controlling the throttle valve based on the degree of operations of gas (accelerator) pedal and brake pedal in combination.

### SUMMARY OF INVENTION

Therefore, it is an objective of the present invention to provide an improved mechanism of the control unit in a vehicle which provides an effective control on the output drive power of the vehicle by controlling the throttle valve based on the degree of operations of gas (accelerator) pedal and brake pedal in combination.

It is further an objective of the present invention to provide an improved mechanism, where the control unit evaluates the degree of operations of both the gas pedal and brake pedal.

It is further an objective of the present invention to prevent damage to the engine, the brakes and the tires of the vehicle.

Another objective of the present invention is to provide the control unit which is able to control and program the power output of the engine.

A first aspect of the present invention provides an electronic control unit for a vehicle according to claim 1. A second aspect of the present invention provides a method to control output power of an engine of a vehicle according to claim 15.

### BRIEF DESCRIPTION OF DRAWINGS

FIG. 1 illustrates an exemplary operating environment of an electronic control unit, in accordance with an embodiment of the present invention;
FIG. 2 illustrates a flow chart showing a method of operating the electronic control unit, in accordance with an embodiment of the present invention;
FIG. 3 illustrates an exemplary vehicle which employs the electronic control unit for controlling a throttle valve, in accordance with an embodiment of the present invention.

### DETAILED DESCRIPTION

The present invention provides an improved vehicle electronic control unit for safety of vehicles and passengers, in situations where a gas (may also referred to as accelerator) pedal and a brake pedal are operated simultaneously. The improved electronic control unit continuously monitors functions and positions of the gas pedal, the brake pedal and a throttle valve by employing one or more electronic sensors with each mechanical component of the vehicle. The electronic control unit, further, evaluates value or degree of operations of the gas pedal and the brake pedal. While evaluating the degree of operations of both the pedals, the electronic control unit may analyze one or more operating conditions of the pedals, such as including and not limiting to the position of the pedals, depression forces with which the pedals are depressed, time stamp and duration of depressing the pedals, order of depressing the pedals, which means if the gas pedal is depressed first than the brake pedal, and the like. Further, the electronic control unit also monitors and reads the operation of the throttle valve.

Detecting a situation of simultaneous operation of the gas pedal and the brake pedal, the electronic control unit assesses the operating conditions of the gas pedal and the brake pedal in combination, evaluates a combined factor of safety based on the operating conditions of both the pedals, and hence, controls the throttle valve according to the factor of safety.

The factor of safety may be a limiting operating condition, which regulates the functioning of the throttle valve according to the combined operating conditions of the gas pedal and the brake pedal. For example, depending on the value of depression forces and the positions of both the gas and the brake pedal, in view of current position of the throttle valve, the electronic control unit may direct the throttle valve to operate in that limiting operating condition. The limiting operating condition may define one or more limiting conditions for the throttle valve to function, which may include and not limit to closing completely or partially; or closing for a determined time period based on that particular situation, closing at a certain angled position for a certain time period, or closing and opening intermittently, and the like.

Therefore, the improved electronic control unit of the present invention analyses the operations of both the gas pedal and the brake pedal, along with analyzing the operation of the throttle valve to evaluate a combined factor of safety defining a limiting operation condition for controlling the throttle valve, where the factor of safety depends on the combined operations of the gas pedal and the brake pedal. Thereby, the output drive power of the vehicle is effectively controlled by the electronic control unit, in the situations of the simultaneous operation of the gas pedal and the brake pedal.

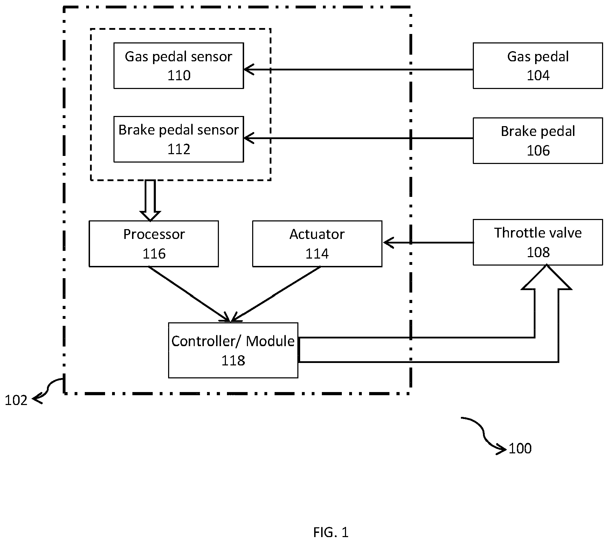

FIG. 1 illustrates an exemplary operating environment of the electronic control unit, in accordance with an embodiment of the present invention. The environment 100 shows the electronic control unit 102 working in coordination with mechanical components of a vehicle, such as a gas pedal 104, a brake pedal 106 and a throttle valve 108 for monitoring and evaluations functions of them. The electronic control unit 102 comprises a gas pedal sensor 110 for detecting operation of the gas pedal 104, and a brake pedal sensor 112 for detecting operation of the brake pedal 106. While monitoring and detecting operations of the gas pedal 104 and the brake pedal 106 respectively, the gas pedal sensor 110 and the brake pedal sensor 112 may detect one or more operating conditions of both the pedals (104 and 106), such as including and not limiting to positions of the pedals, depression forces with which the pedals are depressed, time stamp and duration of depressing the pedals, order of depressing the pedals, which means if the gas pedal is depressed first than the brake pedal, and the like.

In an embodiment, the gas pedal sensor 110 is a contactless sensor to avoid any mechanical damage to the sensor. In another embodiment, the brake pedal sensor 112 is a contactless sensor to avoid any mechanical damage to the sensor. The brake pedal 106 is still mechanically secured by a direct connection with disc brakes at rear axle of the vehicle.

Further, the control unit 102 comprises an actuator 114 that detects and ensures a correct defined position of the throttle valve 108. By using feedback of the actuator 114, the correct position of the throttle valve 108 can be checked. In an embodiment, the actuator is a 5V servo motor. Furthermore, it may be apparent to a person skilled in the art that the throttle valve 10 in an internal-combustion engine may be incorporated in or just outside the carburetor, or in a fuel-injected engine the throttle valve is placed on entrance of the intake manifold, or housed in the throttle body.

The control unit 102 also comprises a processor 116 which receives information or feedback containing values or measurements analyzed by the gas pedal sensor 110 and the brake pedal sensor 112. Hence, the processor 116 is able to detect a situation when the gas pedal 104 and the brake pedal 106 are depressed simultaneously. The processor 116, further, applies processing techniques over the measurements received from the gas pedal sensor 110 and the brake pedal sensor 112, for combining the measurements of operations of both the pedals (104 and 106). The processor 116 produces a `combined current operating value' which accounts to operating conditions of both the gas pedal 104 and the brake pedal 106.

The control unit 102 further comprises a controlling module 118 or may also referred to as controller 118. The controller 118 acts as a safety module for the vehicle, in situations when the gas pedal 104 and the brake pedal 106 are operated simultaneously. The controller 118 is in communication with the actuator 114 and the processor 116 to receive feedbacks from them, which contain current correct position and operation of the throttle valve 108, and the combined current operating value of the gas pedal 104 and the brake pedal 106, respectively. Receiving feedbacks from the actuator 114 and the processor 116, the controller 118 provides a `combined factor of safety' defining a 'limiting operating condition' for the throttle valve 108. Therefore, the controller 118 controls or regulates the operation of the throttle valve 108, based on the limiting operating condition, whenever a situation of simultaneous operations of the gas pedal 104 and the brake pedal 106 is detected by the processor 116. The controller 118 may control the throttle valve 108 in one or more different ways, defined in the limiting operating condition, depending on the combined current operating conditions of the gas pedal 104 and the brake pedal 106, and further, in view of the current position and operation of the throttle valve 108. The limiting operating condition may define one or more limiting conditions for the throttle valve 108 to function, which may include and not limit to closing the valve 108 completely or partially; closing for a determined time period based on the current operations of the pedals (104 and 106); closing at a certain angled position for a certain time period; or closing and opening intermittently for short time durations, and the like.

Further in an embodiment, the controller 118 receives feedback, from the processor 116, containing the combined measurements of the operations of the pedals (104 and 106) in an analog way. The controller 118 then filters and calibrates the measurements, before providing the limiting operating condition for the throttle valve 108. The brake pedal 106 always has priority over the gas pedal 104. When the brake pedal 106 is activated, the RPM of a petrol engine is lowered. This way, it is not possible to accelerate while the brake is still active.

The controller 118 is powered by an alternator (not shown in the FIG. 1), which is further connected to a drive shaft of the vehicle. The controller 118 may have other more functions to operate, such as including and not limited to controlling brake lights, headlights and tail lights of the vehicle, because the controller 118 knows the exact positions of both the gas 104 and brake pedal 106, the brake lights can be controlled this way; calculating the rotations per minute of the vehicle's engine, where a petrol engine is provided with a pick-up coil which registers the ignition pulses of the petrol engine, based on these pulses, the RPM of the engine is determined; calculating the speed of the vehicle, where the speed can be determined by checking voltage of the alternator, powering the controller 118. This way the RPM of the alternator can be determined, and at the same time the speed of the vehicle. The controller 118 may further be able to interrupt ignition of the vehicle's engine and thus shut down the engine putting an emergency stop. The controller 118 may also be able to charge a battery of the vehicle, where the voltage of the alternator is converted to a suitable voltage to charge the battery. The maximal voltage provided to the battery is 14.4V, at a maximal current of 1.2A.

In an embodiment, the controller 118 may also have a Bluetooth functionality, which may allow the controller 118 to execute one or more functions from short range Bluetooth distance. The functions may include and not limited to lowering the RPM of the engine to a stationary RPM, independent of the gas pedal 104; shutting down the engine; limiting the RPM; limiting the speed; sending out information like speed, rpm, position of gas and brake pedal, battery voltage, and the like.

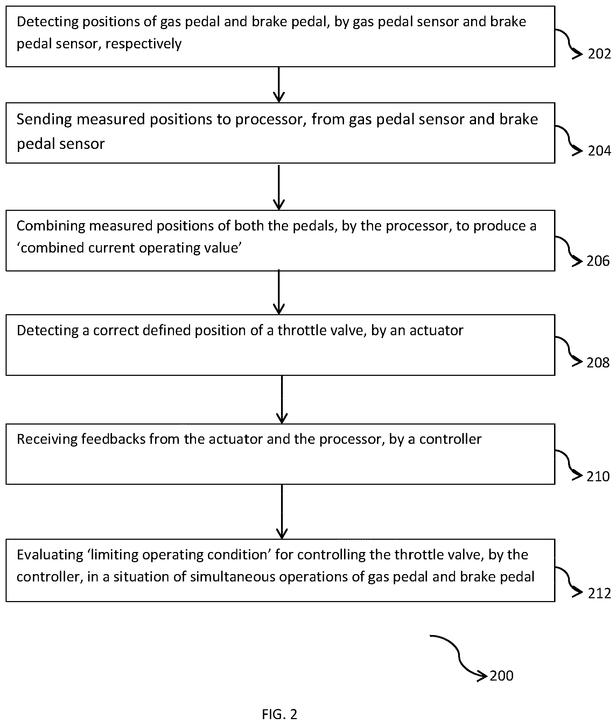

FIG. 2 illustrates a flow chart showing a method of operating the electronic control unit, in accordance with an embodiment of the present invention. The method 200 shows, at a step 202, detecting and evaluating operating conditions of the gas pedal 104 and the brake pedal 106, by the gas pedal sensor 110 and the brake pedal sensor 112, respectively. The operating conditions evaluated of the pedals (104 and 106) may include and not limited to positions of the pedals, depression forces with which the pedals are depressed, time stamp and duration of depressing the pedals, order of depressing the pedals, which means if the gas pedal is depressed first than the brake pedal, and the like. Further, at a step 204, the processor 116 receives feedback, from the gas pedal sensor 110 and the brake pedal sensor 112, containing the values or measurements related to the operating conditions of the gas pedal 104 and the brake pedal 106. At a step 206, the processor 116 combines the measurements of operating conditions of both the pedals (104 and 106) to produce a `combined current operating value' which accounts to operating conditions of both the gas pedal 104 and the brake pedal 106.

Furthermore, at step 208, the actuator 114 detects and ensures a correct defined position of the throttle valve 108. Thereafter, at step 210, the controller 118 receive feedbacks from the actuator 114 and the processor 116 which contain current correct position and operation of the throttle valve 108, and the combined current operating value of the gas pedal 104 and the brake pedal 106, respectively. At a next step 212, the controller 118 evaluates a `combined factor of safety' defining a `limiting operating condition' for controlling the throttle valve 108, whenever a situation of simultaneous operations of the gas pedal 104 and the brake pedal 106 is detected by the processor 116, where the limiting operating condition for the throttle valve 108 is based on the combined current operating conditions of the gas pedal 104 and the brake pedal 106, and further, in view of the current position and operation of the throttle valve 108.

Therefore, the controller 118 controls the operation of the throttle valve 108 by taking into account operations of the gas pedal 104 and the brake pedal 106, both, and further in view of the position of the throttle valve 108.

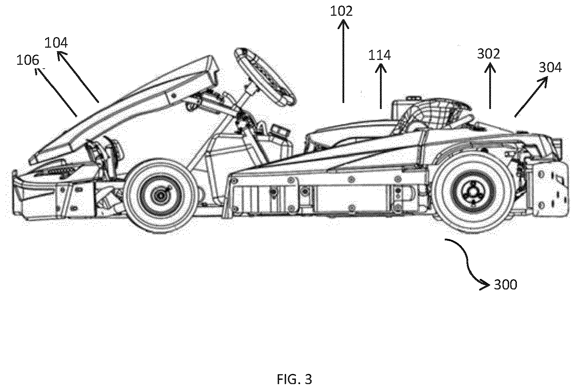

FIG. 3 illustrates an exemplary vehicle which employs the electronic control unit for controlling the throttle valve, in accordance with an embodiment of the present invention. The vehicle 300 shows the gas pedal 104, the brake pedal 106, electronic control unit 102, and the actuator 114. The vehicle also shows the alternator 302, which powers the control unit 102. When rear wheels of the vehicle 300 are in motion, the alternator 302 is driven. The alternator 302 provides the power to charge a battery 304. In an embodiment, the batter 304 is a 12V / 8AH battery needed to power the control unit 102.

Further in an embodiment, the vehicle 300 may also be equipped with an external CAN communication module which may be communicating with the controller 118. The communication signal is provided with extension modules like a display module in a steering wheel. Other external users can make use of the CAN communication module to control and read the controller 118 from outside the vehicle. (for example, limiting the engine, shutting down the engine or limiting the speed).

Advantageously, the present invention provides an improved electronic control unit for a vehicle that effectively and more precisely controls a throttle valve, whenever an unintentional or accidental simultaneous operation of the gas pedal and the brake pedal is detected. The control unit takes into consideration the operating conditions, including the positions, the depression forces, etc., of both the gas pedal and the brake pedal in determining a limiting operating condition for the throttle valve to function accordingly. Therefore, the drive force of the vehicle can be controlled and reduced, in such unpredictable and dangerous situations.

Further, the control unit is able to control the throttle valve in more than one ways. For example, the control unit may command the throttle valve to completely close, blocking the air intake, and hence, reducing the drive force of the vehicle. Also, the control unit may command the throttle valve to partially close, at a certain angled position. The control unit may also determine a time duration for which the throttle valve should be closed, after which the throttle valve may be opened gradually, to allow normal functioning of the throttle valve and the gas pedal. In another example, the control unit may close/open the throttle valve intermittently to avoid sudden jerks, or sudden emergency braking. Therefore, it may be apparent to a person skilled in the art, that when the control unit evaluates the operations of both the gas pedals and the brake pedals, the throttle valve may be controlled in more than one limiting operating condition.

The control unit also helps to prevent damage to the vehicle's engine, brakes and tires. Another advantage is the possibility to control and program the power output of the engine, since the throttle valve can be controlled in one and more limiting operating conditions, based on the operations of the gas and the brake pedal.

## Claims

1. An electronic control unit for a vehicle comprising an engine, a gas pedal (104), a brake pedal (106) and a throttle valve (108), the electronic control unit comprising:
at least one gas pedal sensor (110) for measuring one or more operating conditions of the gas pedal (104);
at least one brake pedal sensor (112) for measuring one or more operating conditions of the brake pedal (106);
a processor (116), for combining measurements related to the one or more operating conditions of the gas pedal (104) and the brake pedal (106);
an actuator (114) for measuring a current position of the throttle valve (108); and
a controller (118)to control the throttle valve (108), based on the combined measurements related to the one or more operating conditions of the gas pedal (104) and the brake pedal (106) obtained from the processor (116) and the current position of the throttle valve obtained from the actuator (114), when a simultaneous operation of the gas pedal (104) and the brake pedal (106) is detected.

2. The electronic control unit according to claim 1, wherein the one or more operating conditions of the gas pedal (104) and the brake pedal (106) include one or more of: positions of each pedal, depression forces with which the pedals are depressed, time stamp and duration of depressing the pedals, order of depressing the pedals, which means if the gas pedal (104) is depressed first than the brake pedal (106).

3. The electronic control unit according to claim 1, wherein the controller (118) determines a limiting operating condition, for controlling the throttle valve (108), based on the combined measurements related to the one or more operating conditions of both the gas pedal (104) and the brake pedal (106), along with the current position of the throttle valve (108), the limiting operating condition for the throttle valve (108) includes one or more of closing the throttle valve (108) completely or partially; closing for a determined time period based on the current operations of the gas pedal (104) and the brake pedal (106); closing at a certain angled position for a certain time period; or closing and opening intermittently for short time durations.

4. The electronic control unit according to claim 3, wherein the controller (118) combines the values of the one or more operating conditions of the gas pedal (104) and the brake pedal (106) in an analog way; and further, filters and calibrates the values to determine the limiting operating condition for the throttle valve (108).

5. The electronic control unit according to claim 1, wherein the controller (118) is configured to control and program rotational speed of the engine of the vehicle.

6. The electronic control unit according to claim 1, wherein the vehicle comprises an alternator connected to a drive shaft of the vehicle that charges a battery of the vehicle to power the electronic control unit (102).

7. The electronic control unit according to claim 5, wherein a pick-up coil registers ignition pulses of the engine based on which the rotational speed of the engine is determined.

8. The electronic control unit according to claim 5, wherein the rotational speed of the engine is lowered to a predetermined fixed value independent of the operation of the gas pedal (104).

9. The electronic control unit according to claim 1, wherein the actuator (114) is a servomotor.

10. The electronic control unit according to claim 1, wherein the gas pedal sensor (110) and the brake pedal sensor (112) are contactless sensors.

11. The electronic control unit according to claim 1, wherein the controller (118) interrupts the ignition of the engine of the vehicle thereby shutting it down, when the gas pedal (104) and the brake pedal (106) are operated simultaneously.

12. The electronic control unit according to claim 1, wherein a display module installed in a steering wheel of the vehicle communicates with the electronic control unit (102) to output signals from the controller (118).

13. The electronic control unit according to claim 1, wherein brake lights of the vehicle are controlled based on measurements of the positions of the gas pedal (104) and the brake pedal (106).

14. The electronic control unit according to claim 1, wherein output power of the engine of the vehicle is wirelessly controlled by equipping the electronic control unit (102) with a Bluetooth communication module.

15. A method to control output power of an engine of a vehicle comprising:
evaluating one or more operating conditions of a gas pedal (104) and a brake pedal (106) each, by a gas pedal sensor (110) and a brake pedal sensor (112) respectively;
combining measurements related to the one or more operating conditions of the gas pedal (104) and the brake pedal (106) using a processor (116);
measuring a current position of a throttle valve (108) of the vehicle using an actuator (114); and
controlling the throttle valve (108), by a controller (118), based on the combined measurements related to the one or more operating conditions of the gas pedal (104) and the brake pedal (106) obtained from the processor (116) and the current position of the throttle valve (108) obtained from the actuator (114), when a simultaneous operation of the gas pedal (104) and the brake pedal (106) is detected.

## Patentansprüche

1. Elektronische Steuereinheit für ein Fahrzeug, das einen Motor, ein Gaspedal (104), ein Bremspedal (106) und eine Drosselklappe (108) umfasst, wobei die elektronische Steuereinheit Folgendes umfasst:
mindestens einen Gaspedalsensor (110) zur Messung einer oder mehrerer Betätigungsbedingungen des Gaspedals (104);
mindestens einen Bremspedalsensor (112) zur Messung einer oder mehrerer Betätigungsbedingungen des Bremspedals (106);
einen Prozessor (116) zum Kombinieren von Messungen, die sich auf die eine oder mehrere Betätigungsbedingungen des Gaspedals (104) und des Bremspedals (106) beziehen;
eine Betätigungsvorrichtung (114) zum Messen einer aktuellen Position der Drosselklappe (108); und
eine Steuereinheit (118) zum Steuern der Drosselklappe (108) auf der Grundlage der kombinierten Messungen, die sich auf die eine oder mehrere Betätigungsbedingungen des Gaspedals (104) und des Bremspedals (106) beziehen, die von dem Prozessor (116) erhalten werden, und der aktuellen Position der Drosselklappe, die von der Betätigungsvorrichtung (114) erhalten wird, wenn eine gleichzeitige Betätigung des Gaspedals (104) und des Bremspedals (106) erkannt wird.

2. Elektronische Steuereinheit nach Anspruch 1, wobei die eine oder mehrere Betätigungsbedingungen des Gaspedals (104) und des Bremspedals (106) eine oder mehrere der Folgenden beinhalten: Positionen jedes Pedals, Niederdrückkräfte, mit denen die Pedale niedergedrückt werden, Zeitstempel und Dauer des Niederdrückens der Pedale, Reihenfolge des Niederdrückens der Pedale, d. h. ob zuerst das Gaspedal (104) und dann das Bremspedal (106) niedergedrückt wird.

3. Elektronische Steuereinheit nach Anspruch 1, wobei die Steuereinheit (118) eine begrenzende Betätigungsbedingung zur Steuerung der Drosselklappe (108) auf der Grundlage der kombinierten Messungen bestimmt, die sich auf die eine oder mehrere Betätigungsbedingungen sowohl des Gaspedals (104) als auch des Bremspedals (106) zusammen mit der aktuellen Position der Drosselklappe (108) beziehen, wobei die begrenzende Betätigungsbedingung für die Drosselklappe (108) eines oder mehrere der Folgenden beinhaltet: vollständiges oder teilweises Schließen der Drosselklappe (108); Schließen für eine bestimmte Zeitspanne auf der Grundlage der aktuellen Betätigungen des Gaspedals (104) und des Bremspedals (106); Schließen in einer bestimmten Winkelposition für eine bestimmte Zeitspanne; oder intermittierendes Schließen und Öffnen für kurze Zeitspannen.

4. Elektronische Steuereinheit nach Anspruch 3, wobei die Steuereinheit (118) die Werte der einen oder mehreren Betätigungsbedingungen des Gaspedals (104) und des Bremspedals (106) auf eine analoge Weise kombiniert; und weiter die Werte filtert und kalibriert, um die begrenzende Betätigungsbedingungen für die Drosselklappe (108) zu bestimmen.

5. Elektronische Steuereinheit nach Anspruch 1, wobei die Steuereinheit (118) so konfiguriert ist, dass sie die Motordrehzahl des Fahrzeugs steuert und programmiert.

6. Elektronische Steuereinheit nach Anspruch 1, wobei das Fahrzeug eine Lichtmaschine umfasst, die mit einer Antriebswelle des Fahrzeugs verbunden ist und eine Batterie des Fahrzeugs auflädt, um die elektronische Steuereinheit (102) zu betreiben.

7. Elektronische Steuereinheit nach Anspruch 5, wobei eine Aufnahmespule Zündimpulse des Motors registriert, auf deren Grundlage die Motordrehzahl bestimmt wird.

8. Elektronische Steuereinheit nach Anspruch 5, wobei die Motordrehzahl unabhängig von der Betätigung des Gaspedals (104) auf einen vorgegebenen festen Wert abgesenkt wird.

9. Elektronische Steuereinheit nach Anspruch 1, wobei die Betätigungsvorrichtung (114) ein Servomotor ist.

10. Elektronische Steuereinheit nach Anspruch 1, wobei der Gaspedalsensor (110) und der Bremspedalsensor (112) kontaktlose Sensoren sind.

11. Elektronische Steuereinheit nach Anspruch 1, wobei die Steuereinheit (118) die Zündung des Fahrzeugmotors unterbricht und ihn dadurch abstellt, wenn das Gaspedal (104) und das Bremspedal (106) gleichzeitig betätigt werden.

12. Elektronische Steuereinheit nach Anspruch 1, wobei ein in ein Lenkrad des Fahrzeugs eingebautes Anzeigemodul mit der elektronischen Steuereinheit (102) kommuniziert, um Signale von der Steuereinheit (118) auszugeben.

13. Elektronische Steuereinheit nach Anspruch 1, wobei die Bremslichter des Fahrzeugs auf der Grundlage von Messungen der Positionen des Gaspedals (104) und des Bremspedals (106) gesteuert werden.

14. Elektronische Steuereinheit nach Anspruch 1, wobei die Ausgangsleistung des Fahrzeugmotors drahtlos gesteuert wird, indem die elektronische Steuereinheit (102) mit einem Bluetooth-Kommunikationsmodul ausgestattet wird.

15. Verfahren zum Steuern der Ausgangsleistung eines Fahrzeugmotors, umfassend:
Auswerten einer oder mehrerer Betätigungsbedingungen eines Gaspedals (104) und eines Bremspedals (106) durch einen Gaspedalsensor (110) bzw. einen Bremspedalsensor (112);
Kombinieren von Messungen, die sich auf die eine oder mehrere Betätigungsbedingungen des Gaspedals (104) und des Bremspedals (106) beziehen, unter Verwendung eines Prozessors (116);
Messen einer aktuellen Position einer Drosselklappe (108) des Fahrzeugs unter Verwendung einer Betätigungsvorrichtung (114); und
Steuern der Drosselklappe (108) durch eine Steuereinheit (118) auf der Grundlage der kombinierten Messungen, die sich auf die eine oder mehrere Betätigungsbedingungen des Gaspedals (104) und des Bremspedals (106) beziehen, die von dem Prozessor (116) erhalten werden, und der aktuellen Position der Drosselklappe (108), die von der Betätigungsvorrichtung (114) erhalten wird, wenn eine gleichzeitige Betätigung des Gaspedals (104) und des Bremspedals (106) erkannt wird.

## Revendications

1. Unité de commande électronique pour un véhicule comprenant un moteur, une pédale de gaz (104), une pédale de frein (106) et une soupape d'étranglement (108), l'unité de commande électronique comprenant :
au moins un capteur de pédale de gaz (110) pour mesurer une ou plusieurs conditions de fonctionnement de la pédale de gaz (104) ;
au moins un capteur de pédale de frein (112) pour mesurer une ou plusieurs conditions de fonctionnement de la pédale de frein (106) ;
un processeur (116), pour associer des mesures liées aux une ou plusieurs conditions de fonctionnement de la pédale de gaz (104) et de la pédale de frein (106) ;
un actionneur (114) pour mesurer une position actuelle de la soupape d'étranglement (108) ; et
un dispositif de commande (118) pour commander la soupape d'étranglement (108), sur la base des mesures associées liées aux une ou plusieurs conditions de fonctionnement de la pédale de gaz (104) et de la pédale de frein (106) obtenues à partir du processeur (116) et de la position actuelle de la soupape d'étranglement obtenue à partir de l'actionneur (114), lorsqu'un fonctionnement simultané de la pédale de gaz (104) et de la pédale de frein (106) est détecté.

2. Unité de commande électronique selon la revendication 1, dans laquelle les une ou plusieurs conditions de fonctionnement de la pédale de gaz (104) et de la pédale de frein (106) incluent un ou plusieurs éléments parmi : des positions de chaque pédale, des forces de dépression avec lesquelles les pédales sont enfoncées, un horodatage et une durée d'enfoncement des pédales, une commande d'enfoncement des pédales, ce qui signifie que si la pédale de gaz (104) est enfoncée en premier, la pédale de frein (106) la sera ensuite.

3. Unité de commande électronique selon la revendication 1, dans laquelle le dispositif de commande (118) détermine une condition de fonctionnement limite, pour commander la soupape d'étranglement (108), sur la base des mesures associées liées aux une ou plusieurs conditions de fonctionnement à la fois de la pédale de gaz (104) et de la pédale de frein (106), ainsi qu'avec la position actuelle de la soupape d'étranglement (108), la condition de fonctionnement limite pour la soupape d'étranglement (108) inclut une ou plusieurs parmi la fermeture de la soupape d'étranglement (108) entièrement ou partiellement ; la fermeture pendant une période déterminée sur la base des fonctionnements actuels de la pédale de gaz (104) et de la pédale de frein (106) ; la fermeture à une certaine position angulaire pendant une certaine période ; ou la fermeture et l'ouverture par intermittence pendant des courtes durées.

4. Unité de commande électronique selon la revendication 3, dans laquelle le dispositif de commande (118) associe les valeurs des une ou plusieurs conditions de fonctionnement de la pédale de gaz (104) et de la pédale de frein (106) d'une manière analogue ; et en outre, filtre et étalonne les valeurs pour déterminer la condition de fonctionnement limite pour la soupape d'étranglement (108).

5. Unité de commande électronique selon la revendication 1, dans laquelle le dispositif de commande (118) est configuré pour commander et programmer une vitesse de rotation du moteur du véhicule.

6. Unité de commande électronique selon la revendication 1, dans laquelle le véhicule comprend un alternateur raccordé à un arbre d'entraînement du véhicule qui charge une batterie du véhicule de manière à alimenter l'unité de commande électronique (102).

7. Unité de commande électronique selon la revendication 5, dans laquelle une bobine de détection enregistre des impulsions d'allumage du moteur sur la base desquelles la vitesse de rotation du moteur est déterminée.

8. Unité de commande électronique selon la revendication 5, dans laquelle la vitesse de rotation du moteur est réduite à une valeur fixe prédéterminée indépendamment du fonctionnement de la pédale de gaz (104).

9. Unité de commande électronique selon la revendication 1, dans laquelle l'actionneur (114) est un servomoteur.

10. Unité de commande électronique selon la revendication 1, dans laquelle le capteur de pédale de gaz (110) et le capteur de pédale de frein (112) sont des capteurs sans contact.

11. Unité de commande électronique selon la revendication 1, dans laquelle le dispositif de commande (118) interrompt l'allumage du moteur du véhicule en l'arrêtant ainsi, lorsque la pédale de gaz (104) et la pédale de frein (106) fonctionnent simultanément.

12. Unité de commande électronique selon la revendication 1, dans laquelle un module d'affichage installé dans une roue directrice du véhicule communique avec l'unité de commande électronique (102) pour émettre des signaux à partir du dispositif de commande (118).

13. Unité de commande électronique selon la revendication 1, dans laquelle les feux de stop du véhicule sont commandés sur la base des mesures des positions de la pédale de gaz (104) et de la pédale de frein (106).

14. Unité de commande électronique selon la revendication 1, dans laquelle la puissance de sortie du moteur du véhicule est commandée sans fil en équipant l'unité de commande électronique (102) d'un module de communication Bluetooth.

15. Procédé de commande d'une puissance de sortie d'un moteur d'un véhicule comprenant :
l'évaluation d'une ou plusieurs conditions de fonctionnement d'une pédale de gaz (104) et d'une pédale de frein (106) chacune, respectivement par un capteur de pédale de gaz (110) et un capteur de pédale de frein (112) ;
l'association des mesures liées aux une ou plusieurs conditions de fonctionnement de la pédale de gaz (104) et de la pédale de frein (106) à l'aide d'un processeur (116) ;
la mesure d'une position actuelle d'une soupape d'étranglement (108) du véhicule à l'aide d'un actionneur (114) ; et
la commande de la soupape d'étranglement (108), par un dispositif de commande (118), sur la base des mesures associées liées aux une ou plusieurs conditions de fonctionnement de la pédale de gaz (104) et de la pédale de frein (106) obtenues à partir du processeur (116) et de la position actuelle de la soupape d'étranglement obtenue à partir de l'actionneur (114), lorsqu'un fonctionnement simultané de la pédale de gaz (104) et de la pédale de frein (106) est détecté.
